# EUROPEAN PATENT SPECIFICATION

(11) **EP 2 903 453 B1**
(45) Date of publication and mention of the grant of the patent: **31.05.2017**
(21) Application number: 13731862.2
(22) Date of filing: 29.04.2013
(51) Int. Cl.: A23J 3/18, C12C 1/02, A23L 5/20, A23L 5/30, A23L 7/10, A23L 7/196

(54) **METHOD FOR THE DETOXIFICATION OF GLUTEN PROTEINS FROM GRAINS OF CEREALS**
VERFAHREN ZUR ENTGIFTUNG VON GLUTENPROTEINE AUS KÖRNERN VON GETREIDE
PROCÉDÉ POUR LA DÉTOXIFICATION DES PROTÉINES DE GLUTEN DE GRAINS DE CÉRÉALES

(30) Priority: 02.10.2012 IT RM20120468
(43) Date of publication of application: 12.08.2015
(73) Proprietor: Università degli Studi di Foggia, 71122 Foggia (IT)
(72) Inventor: DI LUCCIA, Aldo, I-71122 Foggia (IT); LAMACCHIA, Carmela, I-71122 Foggia (IT); GIANFRANI, Carmela, I-80128 (IT)
(74) Representative: De Tullio, Michele Elio
(86) International application number: PCT/IB2013/000797
(87) International publication number: WO 2014/053891

(56) References cited:
- WO-A1-01/54519
- CN-A- 101 623 064
- KR-A- 20090 042 672
- US-A1- 2011 293 724
- CRISTINA MITEA ET AL: "A Universal Approach to Eliminate Antigenic Properties of Alpha-Gliadin Peptides in Celiac Disease", PLOS ONE, vol. 5, no. 12, 1 December 2010 (2010-12-01), page e15637, XP055006294, ISSN: 1932-6203, DOI: 10.1371/journal.pone.0015637
- SAMANTHA STOVEN ET AL: "Celiac Disease: Advances in Treatment via Gluten Modification", CLINICAL GASTROENTEROLOGY AND HEPATOLOGY, vol. 10, no. 8, 19 June 2012 (2012-06-19), pages 859-862, XP028433376, ISSN: 1542-3565, DOI: 10.1016/J.CGH.2012.06.005 [retrieved on 2012-06-19]

## Description

The present invention proposes a method for the detoxification of gluten proteins from grains of cereals, in particular from the grains of wheat, aimed to obtain detoxified flours for the preparation of bread and pasta products, from wheat, preferably suitable for the alimentation of patients with celiac disease, but also adequate for its organoleptic characteristics and for its aspect, for the alimentation of the whole population.

### Technical note.

Gluten is a food component constituted principally by proteins. Prolamines represent about 80% of the entire protein fraction present in the cereal caryopsis and are principally constituted by gliadin and glutenin.

Gliadins are monomeric molecules typically classified in alpha, beta, gamma, and omega (according to electrophoretic mobility) for which the monomer condition is due to the absence of cysteine rests as in the case of omega-gliadins, or to the presence of only intra-molecular disulfide bonds (the remaining gliadins).

Glutenins, however, are a complex polymer, constituted of subunits of high (HMW-GS) and low (LMW-GS) molecular weight, stabilized by disulfide intermolecular bridges. Gliadin and glutenin confer technological properties to the flour; gliadins contribute to viscosity of the dough, while glutenins are responsible for the elasticity and toughness of the same.

In particular, the quantity and size of the glutenin polymers are positively correlated with the technological properties of the dough.

These characteristics of glutenin polymers therefore depend on the ability of the individual subunits to form more or less extended polymers. The gluten, in particular, is not present in the cereal caryopsis, but is formed in a later moment; gluten as a protein complex is formed as a consequence of hydration and kneading of the dough and constitutes an essential element for the production of flour and bread as it confers viscosity and elasticity to the dough. As it is known, when water is added to the flour, gliadins (consisting of a single chain protein) begin to combine one to each other forming fibrils (small and thin fibres) that confer extensibility to the mass of gluten. Simultaneously, also the glutenins (composed of different protein subunits) combine one to each other, creating fibres of larger dimensions and forming a structure, stable and very cohesive, which gives consistency and a certain resistance extension to the dough. The strength and degree of leavening of the dough therefore depend on the proportion between gliadin and glutenin content in the flour. The relationship between the two classes of proteins depends on the variety of cereal and gives to the gluten the ability to deform and resist distension.

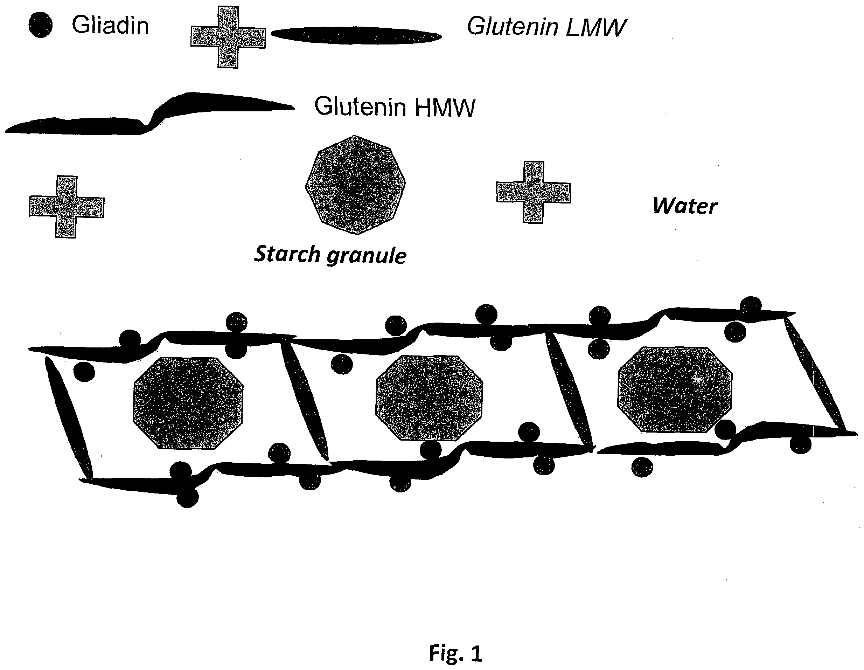

During the mechanical action of kneading, the fibrils of the fibres of glutenin and gliadin begin to intertwine with each other, forming a three-dimensional mesh that incorporates starch granules (Fig. 1), lipids, minerals, water and air bubbles, the latter very important product of the alcoholic fermentation of yeast. When yeast are added to the dough, the production of alcohol and carbon dioxide determine the expansion of meshes of gluten, which widen and relax to grow the volume of the same dough. The subsequent cooking determines the denaturation / coagulation of the proteins and so the gluten, losing the ability to extend, stabilizes in an irreversible manner the structure and shape of the dough.

Gluten as a protein complex has no particular nutritive properties, as it is poor in essential amino acids such as lysine, methionine and tryptophan.

The absence of this compound in the diet does not involve any specific nutritional risk.

On the other hand, gluten is capable of performing toxic activity in particular against intestinal mucosa; therefore the permanent intolerance to gluten of wheat and the corresponding proteins of rye, barley and oats, which enable the inflammatory cascade of inflammatory cytokines, is defined as celiac disease.

Initially, it was thought that the toxic action of the gluten could be attributed to the alpha gliadin fraction; subsequently it was demonstrated that even the omega gliadins and glutenins are able to induce damage to the intestinal mucosa, as well as the prolamines of related cereals such as barley (ordeine), rye (secaline), and oats (avenine).

Of recent interest is the study of a peptide of 33 amino acids of said alpha-gliadin, called 33-mer; said peptide is able to resist the proteolytic activity of digestive enzymes reaching intact the intestinal mucosa, where, having a high affinity for tissue transglutaminase, it exercises a potent immunogenic action in individuals at risk; such action would be determined, following the deamination of the toxic epitopes from peptide, by an intense activation of lymphocytes that TCD4 which release inflammatory cytokines (Shuppan et al., 2009).

In addition, it has been shown that other toxic epitopes of alpha-gliadin would be able to induce apoptosis of enterocytes deriving from explants of the intestinal mucosa of celiac patients.

Therefore, gluten exerts a detrimental effect on intestinal mucosa by activating the inflammatory cascade of cytokines, and by causing a direct toxic effect. Dietary therapy of celiac disease was initially based on total elimination from diet of all grains and food containing gluten (especially bread and pasta, well-known products obtained from wheat, and other food of the Mediterranean alimentation) in the moment in which symptoms of such intolerance, such as abdominal pain, abdominal bloating, gastritis, aphthous stomatitis, mood disorders, headaches etc.. appeared; this treatment allowed patients to obtain the decrease of symptoms and the recovery of the intestinal mucosa structure, if the typical lesions were present. This therapy, however, involves the difficulty of continuance in time, as it creates enormous limitations in the diet of patients, and consequently in the social activities related to food; in order to solve these problems it was decided to produce gluten-free food for persons intolerant to gluten, or food where the gluten could not activate the inflammatory reaction, in order to allow patients to have a normal lifestyle by eating food that partly resembled in taste and appearance to bread and pasta.

Currently, some methods are known thanks to which the toxic action of the gluten has been partially turned off.

A method in experimental phase that has not shown the desired effect has been to create wheat detoxified through genetic manipulation, ie, modified in such a way as not to contain the immunogenic sequences that govern the production of toxic epitopes of gluten can stimulate lymphocytes T.

A first limitation of this method consists in the difficulty of identifying all gene sequences (currently about forty, placed on six loci of two different chromosomes) that govern the coding of immunologically active peptides contained within the primary structure of gluten proteins; this method, moreover, does not guarantee a certain result as there is a high possibility of having not yet known gene sequences that encode other toxic epitopes.

Another limitation could be the lack of confidence of the consumer to consume for a long time "genetically modified" products and, therefore, the difficulty of such products to enter the market to a destination generically aimed at the entire population.

Another method of the prior art, however, provides the use of enzymes (Rizzello et al., 2007) which is a supplementation with endopeptidase of bacterial origin added during the preparation of the of flour, capable of fragmenting the gluten proteins and, in particular, the fragment 33-mer. A limitation of this method is that it is be very expensive in because it involves the use of purified enzymes; the potential use is only in food intended for celiac patients and it becomes consequently very expensive for the high costs of production.

A second limitation of this method is that the use of these enzymes results in the total destruction of gluten network and, consequently, the loss of dough technological properties that cannot be used for the transformation processes in bread or pasta and so you have to resort to tricks structuring such substances (gums, polysaccharides, pregelatinized starch, agar, etc..).

Another method known in the prior art, is the use of microbial enzymes (transglutaminase) in presence of lysine methyl ester to detoxify, by deamidation, toxic epitopes present in wheat gliadin (Gianfrani et al., 2007). This method has the advantage in comparison to the previous methods, to preserve the gluten network and maintain, therefore, the technological properties of the flours. A limitation of this method is that it is very expensive because it involves the use of purified enzymes; the potential use is only in food intended for celiac patients and it becomes consequently very expensive for the high costs of production.

Another significant limitation is that the detoxification depends on the concentration of both toxic proteins and microbial enzyme, as well as by the kinetics of reaction. For these reasons the experiments may not give a certain result.

An alternative to solve the problem of gluten intolerance could be the use of inhibitors of zonulin (Fasano, 2008), a protein that appears to play a key role in altering intestinal permeability.

This method, however, neglects the fact that the transmission of the toxic gliadin does not occur just by intercellular way (which can be blocked by the inhibitor of zonulin) but also by intracellular way.US2011/0293724 discloses a method for reducing toxicity of gluten proteins by treating foodstuffs comprising gluten in vitro with a glutenase.

Cristina Mitea et al. (A Universal Approach to Eliminate Antigenic Properties of Alpha-Gliadin Peptides in Celia Disease, Published December 16, 2010) proposes development of genes that encode alpha-gliadins that are safe for consumption by celiac disease patiens.

Samantha Stoven et al. (Celiac Disease: Advances in Treatment via Gluten Modification, 2012) reviews some new therapies for celiac disease, including wheat alternatives and wheat selection, enzymatic alteration of wheat, oral enzyme supplements and polymeric binders.

CN 101623064 discloses a method for obtaining low-gluten wheat flour using microwave heating.

WO01/54519 discloses heat treatment of grains using microwave energy, for reducing the microrganism content and for inactivating certain enzymes and gluten vitality. It is because of this necessity, i.e. to produce typical food of the Mediterranean diet, such as bread and pasta derived from wheat, in which gluten is not toxic for people with celiac disease, and that can be consumed, for flavour and appearance, by the entire population, that this invention was created.

Purpose of the present invention is to overcome said disadvantages of the prior art by proposing a method of detoxification of gluten proteins, in particular, from grains of wheat, and also other cereals, through exposure to microwaves of these, after having undergone a process of hydration.

The present invention, in fact, is aimed to solve, in particular, the technical problem of the production of food, bread and pasta intended for patients with celiac disease, and deprivation of flour from the toxic gluten action without losing its technical properties to form the dough.

More particularly, the present invention, by the treatment of the mature grain with microwave, mainly wants to solve the technical problem of the production of flours with detoxified gluten that, at the same time, are suited for the technical production of pasta, bread and production of bakery products from wheat, without loosing the formation of the gluten network.

Finally, the present invention, through the production of flours and, consequently, of food products such as bread and pasta detoxified from toxic epitopes of gluten, aims to produce food derived from wheat and equivalent in taste and appearance to those commonly used in the Mediterranean alimentation which determine, through their use in time and by a large part of the population, not only in people with celiac disease, a reduction of the incidence of celiac disease in the population and consequently also the economic impact of the production of specific food products for people with celiac disease.

This has been achieved with a method of detoxification according to claim 1.

### Brief description of drawings

The present invention will now be described, as illustrative way, but without limitation, with particular reference to the accompanying figures, in which:
Figure 1 shows the three-dimensional network that incorporates the starch granules and that is formed in the presence of water, during the mechanical action of kneading, from the binding of gliadin and glutenin;
Figure 2 shows the electrophoretic profile of gliadins extracted from different samples (A, B, C, D, E, F, G, H) out of which the samples A and B were treated with the method of detoxification of the object present invention;
Figure 3 shows the protein profile of detoxified semolina (Fig. 3a are soluble protein and insoluble protein are Fig 3b) by way of SE-HPLC analysis;
Figure 4 shows a graph that shows the production of interferon in T lymphocyte lines generated by intestinal mucosa of patients with celiac disease;
Figure 5 shows the gluten network that is formed after the treatment in the microwave mature grains (a) and the gluten network that is formed naturally (b);
Figure 6 shows the mode of masking the toxic epitope following the detoxification treatment, such as to render the attachment site of gliadins not accessible and / or unrecognizable at the intestinal level by the transglutaminase, which in conditions of celiac disease induces the immune response.

### Description of the invention

In the present invention, a method that provides for the detoxification of gluten proteins, in particular from wheat grain, is described.

The method for making said flour detoxified by toxic epitopes of gluten comprises the following phases:
A) Hydration of the grains, in particular that of wheat, with mains water for about 1 hour; for 100 grams of mature grains 500 ml of water is added. This phase is necessary to trigger the chemical reactions functional to the detoxification of gluten proteins.
B) Removal of the water. This phase is carried out by draining with a sieve to retain the grains and remove the water.
C) Microwave treatment of hydrated grains for two minutes using a power of 1000 Watt. At this stage what is important, is not the temperature within the oven, but the power of the electromagnetic waves that trigger through the water contained in the grains, the reactions of detoxification.
D) Cooling of the cereal grains treated with microwaves at room temperature (20 ° - 22 °C).

All the phases described above are mandatory: the hydration of the grains for an hour allowing the seed to accumulate the amount of water required to trigger, in the presence of electromagnetic waves, the detoxification reactions of gluten.

The power of 1000 Watt, applied according to the previously described procedure, is sufficient for two minutes in order that the energy accumulated by the water favours the production of singlet oxygen radicals, hydroxyl radical or hydrogen by the cellular metabolism (peroxidases, lipoxygenase, etc..). These highly reactive compounds inside the seed of wheat involve polymerization reactions of gluten proteins localized in sectors different from the caryopsis (protein bodies present in the aleurone layer and protein bodies present in the endosperm) by intermolecular bonds and / or intramolecular bonds with conformational change.

The slowly cooling to a temperature of about 20 ° C allows the completion of the chemical reactions triggered by the action of the electromagnetic waves and the water.

The method illustrated in the present invention is based on the analysis of recent studies in which Lamacchia and others (2010) have reported that, when the high temperatures are applied to the caryopsis of wheat, the proteins undergo changes that are not similar to those seen in model systems, consisting only of gluten (Schofield et al., 1983; Singh and MacRitchie, 2004), nor to those seen in the pasta during the drying cycles.

In particular, albumins and globulins are not incorporated in the polymers of high molecular weight but coagulate and interact with gliadins forming an aggregate of molecular weight intermediate to that of gliadins and albumins and globulins revealed as a new peak called "Intermediate Protein" (IP) peak.

The participation of ω-gliadins to these changes suggests that the interaction between the proteins takes place not only through the formation of disulfide bonds but also through the formation of covalent bonds involving tyrosine residues.

The researchers Lamacchia and others (2010) explained this phenomenon on the basis of the fact that in the caryopsis of wheat, gluten is not yet formed and gluten proteins are deposited in different protein bodies (Rubin et al., 1992, Krishnan et al., 1986; Lending et al., 1989).

In a recent study, Tosi and others (2009) confirmed, in fact, that the HMW are particularly abundant in the innermost layer of the caryopsis of wheat (endosperm) and practically absent in the subaleuronic layer which, however, is rich in gliadins and LMW.

This pattern of deposition is maintained throughout all the development phase of the caryopsis of wheat and continues even after the merger of protein bodies and the formation of the starchy matrix.

Therefore, the segregation of gluten proteins in protein bodies when they are in the caryopsis and the application of high temperatures in this stage before the milling, would allow such proteins of experiencing structural changes such as not to make them recognizable anymore by intestinal transglutaminase, thereby blocking the waterfall of inflammatory cytokine.

The grains, hydrated and subjected to treatment with microwaves, generates water radicals that trigger the polymerization of gluten proteins.

This polymerization appears to be favoured when gluten proteins are segregated in the protein bodies due to the fact that within these protein bodies are very close to each other allowing an easy interaction between the various classes depending on the type of body protein in which they are; in the case of the vacuolar protein bodies (aleuronic layer) we can have interactions between gliadins, LMW and albumins / globulins, in the case of protein bodies of endoplasmic type (endosperm layer) we can only have interactions between HMW.

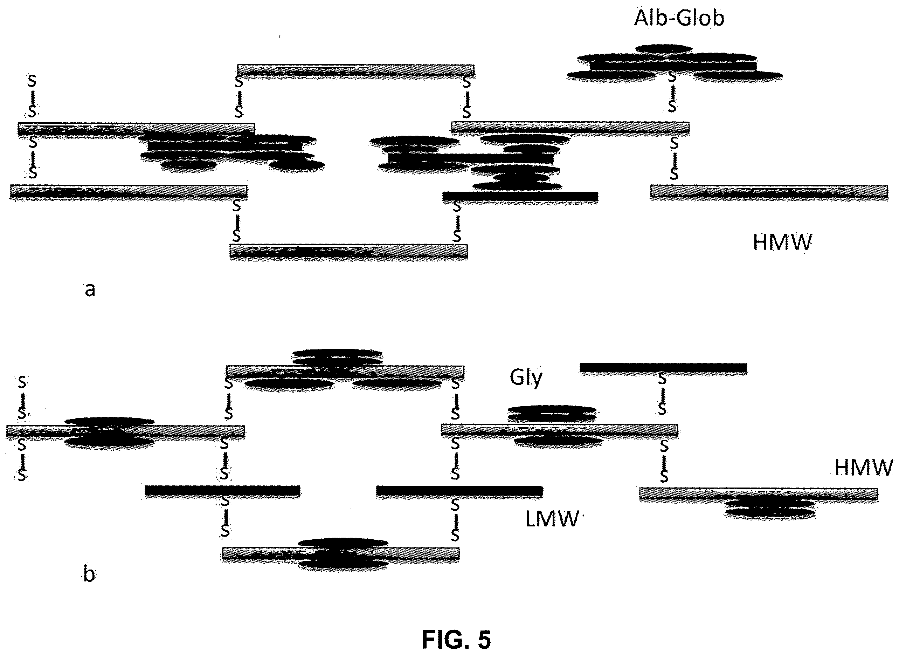

The polymerization induced by the water and by the electromagnetic waves does not determine the loss of free sulfhydryl groups, necessary for the formation of gluten, resulting in a protein network although different in conformation (Fig. 5a) (due to the interaction of the different aggregates mentioned above) from the gluten network which is formed naturally (Fig. 5b), but which ensures the adequate technological properties of transformation of wheat flour in a final product.

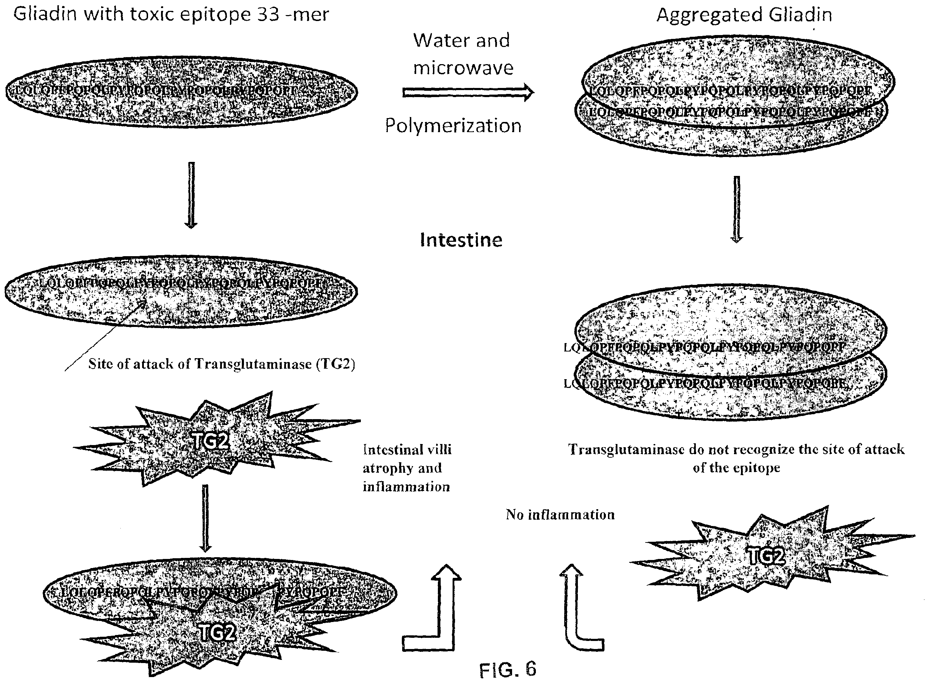

The polymerization of gluten proteins by water radicals favoured by electromagnetic waves produces the formation of covalent bonds between these gluten proteins. The formation of these bonds between gluten proteins inside the protein bodies allows a sort of masking of the toxic epitope, as shown in Figure 6, such as to make the site of attack of gliadins not accessible and / or not recognizable at the intestinal level by the transglutaminase, which in celiac disease conditions induces the immune response. The structural changes of gluten proteins of detoxified flours are highlighted through the test that can determine the gluten index, evaluating the strength of the same.

The gluten of detoxified flours, passing completely through the grid of the device, undergoes a leaching of the components of the grain, evidencing the presence of structural changes in the gluten protein.

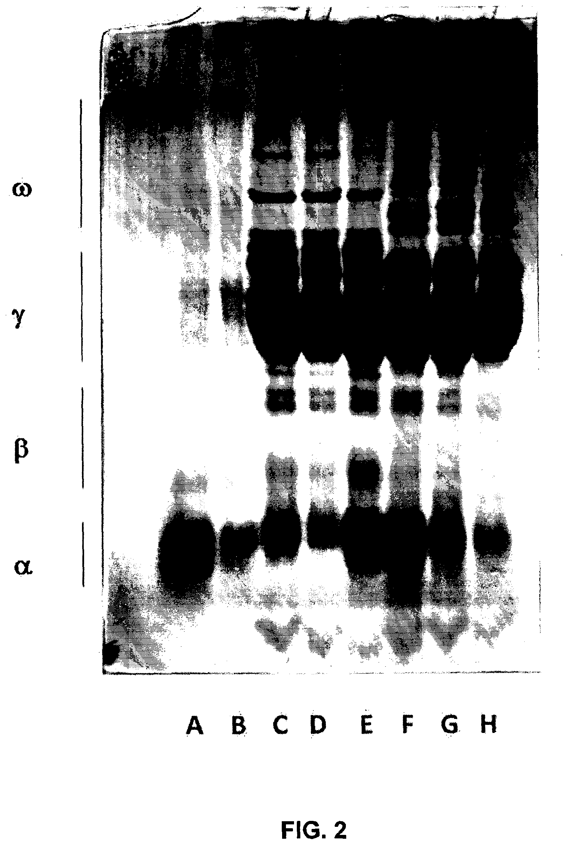

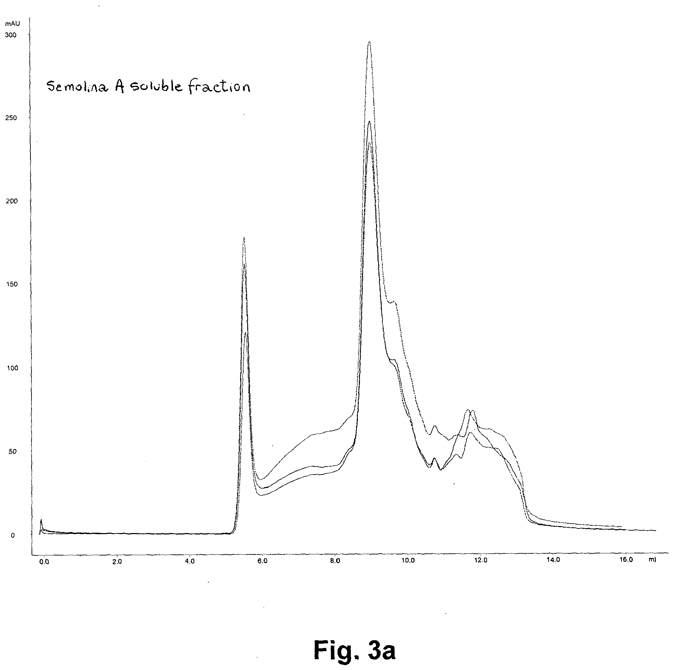

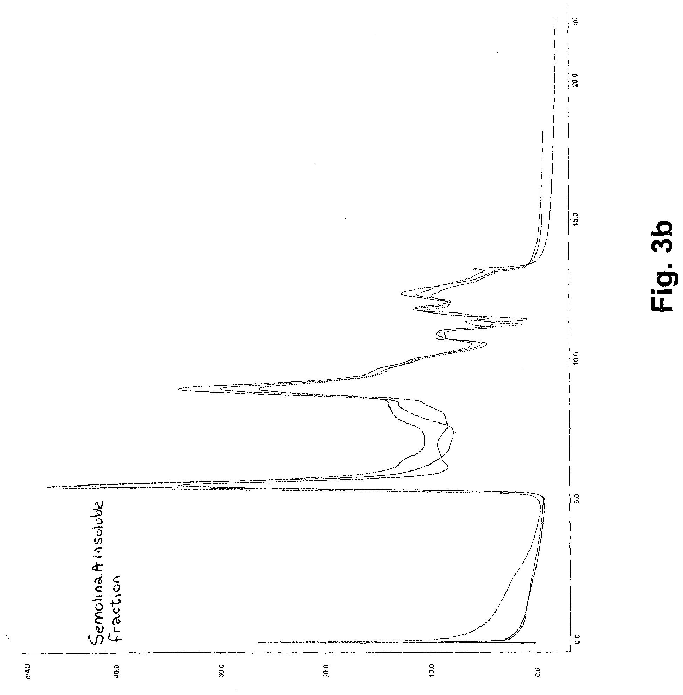

These structural changes of the gluten of detoxified flours are better analyzed in Figures 2 and 3; Figure 2 shows the change of the protein pattern of gliadins extracted from different samples of grains treated with the method of detoxification object of the present invention (A and B - durum wheat semolina), compared with other untreated samples (C, D, E - durum wheat semolina, F, G, H - soft wheat flour), the gliadins are gluten proteins which are soluble in alcohol that contain toxic epitopes recognized in the intestine.

The decrease in the intensity of the electrophoresis bands indicates a qualitative and quantitative change of gliadins.

Quantitative because most of them, due to the processes of polymerization induced by the microwave treatment, have been rendered insoluble in an ethanol solution to 70% and therefore not detectable on the electrophoresis gel.

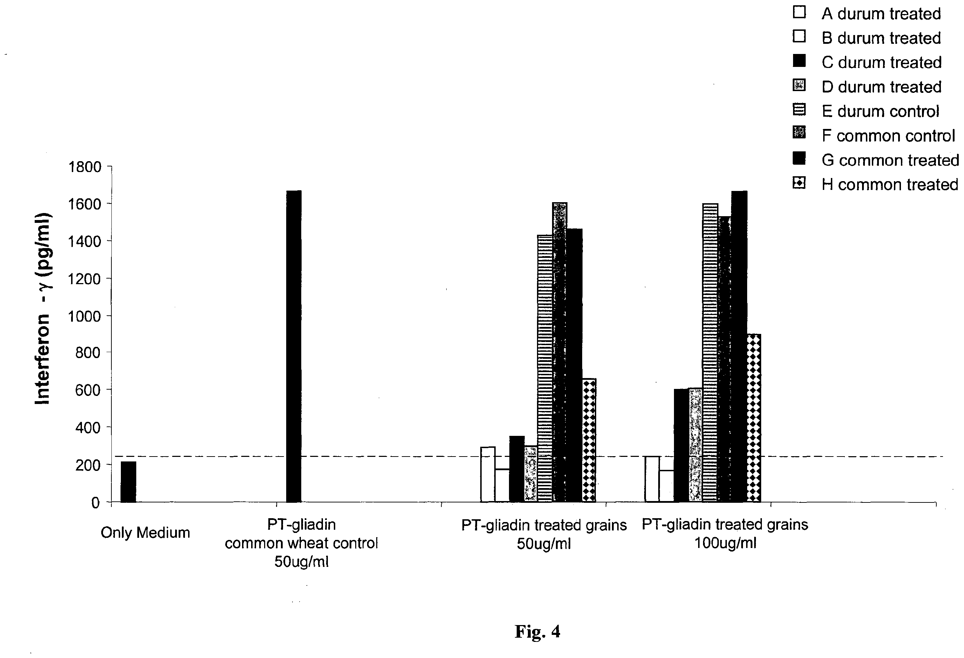

Qualitative because the few visible bands are however aggregates of gliadins (which undergo a polymerization by microwaves) to the lowest molecular weight and therefore extractable in ethanol solution and detectable on the electrophoresis gel, but however non-toxic in accordance with the immunological findings performed *in vitro* (Fig. 4).

Figures 3a and 3b, on the other side, show two graphs that indicate the protein profile of respectively soluble and insoluble proteins, extracted from detoxified grains (the curves with shades of gray dark) and untreated grians (the curve with shades of lighter gray) by SE-HPLC; figure 3a indicates two main peaks, one on the right that represents the polymers of high molecular weight (HMW and LMW); the one on the left represents the oligomers and monomers of gliadin; the graph shows the decrease of the solubility of gluten proteins after the detoxification treatment of the present invention.

Figure 3b indicates an increase of the two peaks in the detoxified flour, indicating an increase in insoluble proteins after the treatment of detoxification.

These structural changes of gluten proteins would be likely to deprive gluten from its toxicity, thanks to a masking of the attack site of the transglutaminase (Fig. 6) and allowing the maintenance of the technical properties of the dough due to the maintenance of the free sulfhydryl groups, necessary for the formation of the gluten network (Figs. 5a and 5b).

Regarding the gluten's loss of toxicity present in treated flours, Figure 4 shows a graph of a test of immunological cells lymphocytes (T cells) of celiac patients; in this chart the production of interferon-y in lines of T lymphocytes taken from intestinal mucosa of celiac patients is represented; the cellular lines have been proved to be highly responsive to gliadin from hexaploid wheat (tryptic digest Pepto- PT) after deamination with transglutaminase tissue, while any immunological reactivity to gliadin extracted from flours A and B treated at concentrations of 50 and 100 mg / ml has been observed.

Lastly, regarding the maintenance of technological properties of the detoxified flour, we know that in the kneading with water, the flour absorbs water causing the binding of gliadins and glutenins and, therefore, the formation of gluten network that influence the formation of the viscoelastic mass for entraining gas.

Flour detoxified by this method retains the ability to kneading the dough as it does not loose the ability to form bonds between free cysteine disulfide groups (Figures 5a and 5b) necessary for the formation of the network; the dough obtained with the detoxified flours maintains the characteristic of extensibility, which, as is known, is mainly due to gliadin, loosing partially elasticity and viscosity due to the formation of aggregates of protein bodies through covalent bonds.

In particular, the loss of a part of elasticity is due to the interaction between the sub units of HMW, through covalent bonds that involve amino acids of the central domain of the protein subunit of high molecular weight, which is known, from studies in the literature, determining the elasticity of the dough.

The loss of viscosity of the dough is instead due to the interaction of the gliadins between them, as they are responsible for this rheological characteristic.

### Additional advantages of the invention

A first advantage of the method is that from those grains and flour it will be possible to produce non-toxic food for people with celiac desease, with organoleptic characteristics equivalent in taste and appearance to those commonly used in the Mediterranean alimentation.

The second advantage is an economic advantage, due to the raw material used, wheat (Italy is one of the largest producers of wheat in the world), instead of corn and all structuring substances (tires, agar, gelatine, etc.) which are expensive, but also for the use during the experimentation of only mains water and electromagnetic waves for a short time; consequently, the gluten-free products will no longer be expensive as they are now.

The third advantage is of health type, as the wheat flours are less starchy than those of corn (used until know for the production of gluten-free products) and therefore the resulting products are characterized by a more low glycemic index and therefore such products would be ideal for the feeding of patients who, in addition to celiac disease, also suffer from Diabetes Mellitus type 1, an association frequently observed because of the likely common genetic substrate shared by the two diseases.

The fourth advantage is the simplicity the procedure, easily applicable also to other grains including, for example, the barley to produce beer, free from toxic ordeine (proteins similar to the gliadins of wheat) or oats for make products for breakfast, also free from toxic substances (proteins similar to gliadins of wheat).

The fifth advantage is the production of foods that determine, through their use in time and by large numbers of the population, not only people with celiac disease, a reduction in the incidence of celiac disease in the population due to the smaller immunogenic effect of the detoxified product

The present invention has been described for illustrative purpose, without limitation, but it is to be understood that variations and / or modifications may be made by the experts in the art without departing from the scope of protection, as defined by enclosed claims.

## Claims

1. A method for the detoxification of gluten proteins from grains of cereals, **characterized by** the following phases:
A. hydration with water of the cereal grains, performed in a time frame between 30 minutes and 3 hours by using 500 ml of water for every 100 grams of grains;
B. removal of water from the cereal grains;
C. microwave treatment of the cereal grains, performed in a time frame between one and three minutes, using a power between 750 and 1500 watts;
D. cooling of the cereal grains.

2. Method for the detoxification of gluten proteins according to claim 1 **characterized in that** the time frame of step A is of approximately one hour.

3. Method for the detoxification of gluten proteins according to claim 1 **characterized in that** the time interval is of two minutes and the used power is of 1000 watts.

4. Method for the detoxification of gluten proteins according to claim 1 **characterized in that** the cooling phase of the grains is performed at a temperature between 18 ° C and 24 ° C.

5. Method according to anyone of the preceding claims, wherein the grains of cereal are selected between wheat, barley and oats.

6. Grains selected in the group of wheat, barley and oats obtainable according to the method as defined in claims 1-5 **characterised in that** they are detoxified from toxic epitopes of gluten.

7. A product obtainable from the grains of claim 6 selected in the group of semolina, flours, products for breakfast, beer.

8. Grains and products according to claims 6-7 for use to feed people with celiac disease

9. Use of wheat according to claim 6 for the production of semolina and flour for people with celiac disease and for people suffering from Diabetes Mellitus Type 1.

10. Use of the barley according to claim 6 for the production of beer free from toxic ordeine.

11. Use of the oats according to claim 6 for the production of products free from toxic avenine.

12. Use of the flour according to claim 7, for the preparation of foodstuff suitable for people with celiac disease and equivalent, in taste and appearance, to foodstuff commonly used in the Mediterranean diet.

## Patentansprüche

1. Verfahren zur Detoxifizierung von Glutenproteinen aus Getreidekörnern, **gekennzeichnet durch** die folgenden Phasen:
A. Hydratisieren der Getreidekörner mit Wasser, welches in einem Zeitrahmen zwischen 30 Minuten und 3 Stunden unter Verwendung von 500 ml Wasser auf jeweils 100 Gramm der Körner durchgeführt wird;
B. Entfernen des Wassers von den Getreidekörnern;
C. Mikrowellenbehandlung der Getreidekörner, die in einem Zeitrahmen zwischen einer und drei Minuten unter Verwendung einer Leistung zwischen 750 und 1500 Watt durchgeführt wird;
D. Kühlen der Getreidekörner.

2. Verfahren zur Detoxifizierung von Glutenproteinen nach Anspruch 1, **dadurch gekennzeichnet, dass** der Zeitrahmen von Schritt A ungefähr eine Stunde beträgt.

3. Verfahren zur Detoxifizierung von Glutenproteinen nach Anspruch 1, **dadurch gekennzeichnet, dass** das Zeitintervall zwei Minuten beträgt und die verwendete Leistung 1000 Watt ist.

4. Verfahren zur Detoxifizierung von Glutenproteinen nach Anspruch 1, **dadurch gekennzeichnet, dass** die Kühlphase der Körner bei einer Temperatur von 18 °C bis 24 °C durchgeführt wird.

5. Verfahren nach einem der vorhergehenden Ansprüche, wobei die Getreidekörner ausgewählt sind aus Weizen, Gerste und Hafer.

6. Körner ausgewählt aus der Gruppe von Weizen, Gerste und Hafer, die gemäß dem Verfahren wie in den Ansprüchen 1-5 definiert erhältlich sind, **dadurch gekennzeichnet, dass** sie von toxischen Epitopen von Gluten detoxifiziert sind.

7. Produkt, das aus den Körnern von Anspruch 6 erhältlich ist, ausgewählt aus der Gruppe von Grieß, Mehlen, Frühstücksprodukten, Bier.

8. Körner und Produkte nach den Ansprüchen 6-7 zur Verwendung zur Ernährung von Menschen mit Zöllakle.

9. Verwendung von Weizen nach Anspruch 6 zur Herstellung von Grieß und Mehl für Menschen mit Zöliakie und Menschen, die unter Diabetes mellitus Typ 1 leiden.

10. Verwendung der Gerste nach Anspruch 6 zur Herstellung von Bier, das frei von toxischem Hordein ist.

11. Verwendung des Hafers nach Anspruch 6 zur Herstellung von Produkten, das frei von toxischem Avenin ist.

12. Verwendung des Mehls nach Anspruch 7 zur Herstellung von Nahrungsmitteln, die für Menschen mit Zöliakie geeignet sind und in Geschmack und Erscheinungsbild Nahrungsmitteln gleichwertig sind, die üblicherweise In der Mittelmeerdiät verwendet werden.

## Revendications

1. Procédé pour la détoxification de protéines de gluten provenant de grains de céréales, **caractérisé par** les phases suivantes :
A. hydratation des grains de céréales avec de l'eau, réalisée en une période de temps entre 30 minutes et 3 heures par l'utilisation de 500 ml d'eau par 100 grammes de grains ;
B. élimination de l'eau des grains de céréales ;
C. traitement aux micro-ondes des grains de céréales, réalisé en une période de temps entre une et trois minutes à l'aide d'une puissance entre 750 et 1500 watts ;
D. refroidissement des grains de céréales.

2. Procédé pour la détoxification de protéines de gluten selon la revendication 1, **caractérisé en ce que** la période de temps de l'étape A est d'environ une heure.

3. Procédé pour la détoxification de protéines de gluten selon la revendication 1, **caractérisé en ce que** l'intervalle de temps est de deux minutes et la puissance utilisée est de 1000 watts.

4. Procédé pour la détoxification de protéines de gluten selon la revendication 1, **caractérisé en ce que** la phase de refroidissement des grains est réalisée à une température entre 18°C et 24°C.

5. Procédé selon l'une quelconque des revendications précédentes, les grains de céréales étant choisis parmi le blé, l'orge et l'avoine.

6. Grains choisis dans le groupe formé par le blé, l'orge et l'avoine, pouvant être obtenus selon le procédé tel que défini dans les revendications 1-5, **caractérisés en ce qu'**ils sont détoxifiés des épitopes toxiques du gluten.

7. Produit pouvant être obtenu à partir des grains de la revendication 6, choisi dans le groupe formé par la semoule, les farines, les produits pour le petit déjeuner, la bière.

8. Grains et produits selon les revendications 6-7, destinés à être utilisés pour nourrir les personnes atteintes de la maladie coeliaque.

9. Utilisation de blé selon la revendication 6 pour la production de semoule et de farine pour les personnes atteintes de la maladie coeliaque et pour les personnes souffrant du diabète sucré de type 1.

10. Utilisation de l'orge selon la revendication 6 pour la production de bière exempte d'hordéine toxique.

11. Utilisation de l'avoine selon la revendication 6 pour la production de produits exempts d'avénine toxique.

12. Utilisation de la farine selon la revendication 7 pour la préparation de denrées alimentaires, appropriées pour des personnes atteintes de la maladie coellaque, ou équivalentes, en goût ou en aspect, aux denrées alimentaires couramment utilisées dans le régime méditerranéen.
